# EUROPEAN PATENT APPLICATION

(11) **EP 1 086 888 A2**
(43) Date of publication of application: **28.03.2001**
(21) Application number: 00120784.4
(22) Date of filing: 22.09.2000
(51) Int. Cl.: B62K 5/04, B62K 15/00

(54) **Frame for a foldable pedal and/or motor-driven tricycle**

(30) Priority: 22.09.1999 IT BO990508
(71) Applicant: Di Blasi, Carmelo, 96015 Francofonte (IT); Di Blasi, Carlo Maria, 96015 Francofonte (IT)
(72) Inventor: Di Blasi, Carmelo, 96015 Francofonte (IT); Di Blasi, Carlo Maria, 96015 Francofonte (IT)
(74) Representative: Eccetto, Mauro

(57) **Abstract**

A frame (1) for a foldable tricycle (100), characterized by having an articulated quadrilateral device (16) for collapsing a rear wheel (12).

## Description

The present invention relates to a foldable frame for a tricycle driven by physical force or by a motor.

The frame according to the present invention provides for greatly reducing the overall size of the tricycle to enable troublefree storage in the luggage compartment of a car, camper, aeroplane, etc.

Foldable frames for vehicles with two or more wheels are known.

For example, US-3 887 218 relates to a foldable vehicle which comprises a frame defined by at least a first articulated quadrilateral connected by at least one lever to a saddle fitted to a second articulated quadrilateral. Downward movement of the saddle moves the first articulated quadrilateral so that the rear wheel of the vehicle moves inwards.

EP-648 667 describes the front frame of a vehicle with two or more wheels. The handlebar and the front wheel are connected by a mechanism so that, once the handlebar is released from a lock hook, downward rotation of the handlebar about a hinge moves a connecting rod which in turn rotates the front fork about another hinge, thus simultaneously lowering the handlebar and folding the front wheel inwards of the frame.

It is an object of the present invention to provide a straightforward but effective solution to the problem of folding the rear wheels of a tricycle, so as to achieve a maximum reduction in the overall width of the tricycle.

Combining the device according to the present invention with the two folding mechanisms described in US-3 887 218 and EP-648 667 provides for obtaining a tricycle which, when fully collapsed, is extremely compact and easy to handle.

According to the present invention, there is provided a frame for a foldable tricycle, characterized by comprising a folding device associated with each rear wheel; the folding device being defined by an articulated quadrilateral comprising a first member connected rigidly to the frame; a second member opposite the first member and integral with a support of the wheel; and a third and a fourth member connecting the first and the second member so that, when the third member and the fourth member are extended perpendicular to a longitudinal axis of symmetry of the tricycle, the wheel assumes a travelling configuration, whereas, when the third member and the fourth member are positioned adjacent to the frame in a configuration substantially parallel to the longitudinal axis of symmetry, the wheel is also positioned adjacent to the frame to reduce the overall size of the tricycle.

A non-limiting embodiment of the present invention will be described by way of example with reference to the accompanying drawings, in which:
Figure 1 shows a rear portion of an innovative tricycle frame in accordance with the present invention;
Figure 2a shows a plan view, in the extended position, of the folding devices of two rear wheels forming part of a frame in accordance with the present invention;
Figure 2b shows a plan view of the Figure 2a folding devices in the folded position;
Figure 3 shows a detail of the folding device in Figures 2a, 2b;
Figure 4 shows the mechanism for transmitting motion to one of the rear wheels of the frame according to the present invention.

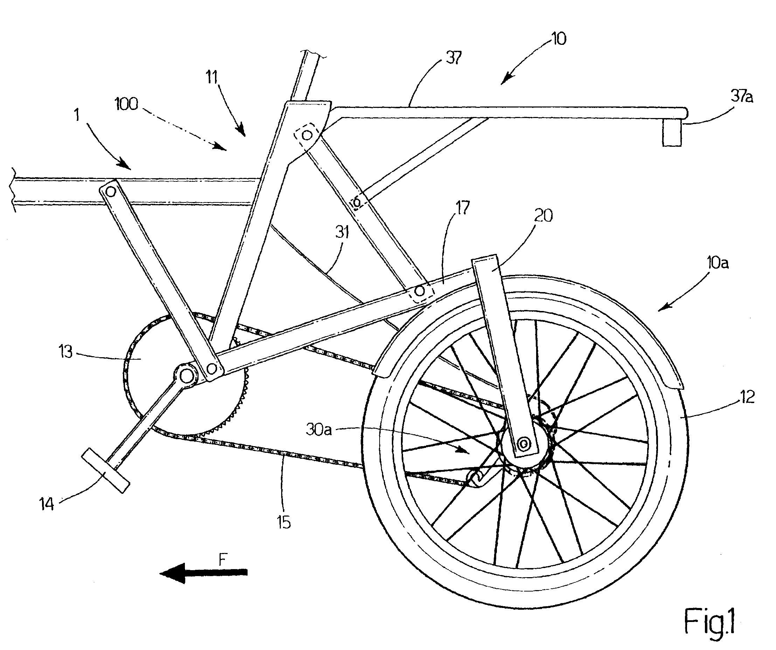

Number 10 in Figure 1 indicates the rear portion of a frame 1 of a tricycle 100, which is substantially known and therefore shown only partly.

Frame 1 also comprises a front portion (not shown) for the front wheel, which may be provided with a folding device identical with that described and claimed in EP-648 667, the description of which is to be considered in all respects an integral part of the present application.

To fold down the saddle (not shown) and simultaneously move the entire rear wheel train forward, use may be made of a mechanism identical with that described and claimed in US-3 887 218, the description of which is to be considered in all respects an integral part of the present application.

Rear portion 10 of frame 1 comprises an articulated parallelogram mechanism 11 which, as illustrated in US-3 887 218, provides for folding the saddle (not shown) and moving the rear train 10a, comprising two wheels 12, forward in a direction indicated by arrow F.

Rear portion 10 of frame 1 also comprises a ring gear 13 having a pedal crank and pedals 14, and for transmitting motion to rear wheels 12 via a chain 15 as described clearly later on.

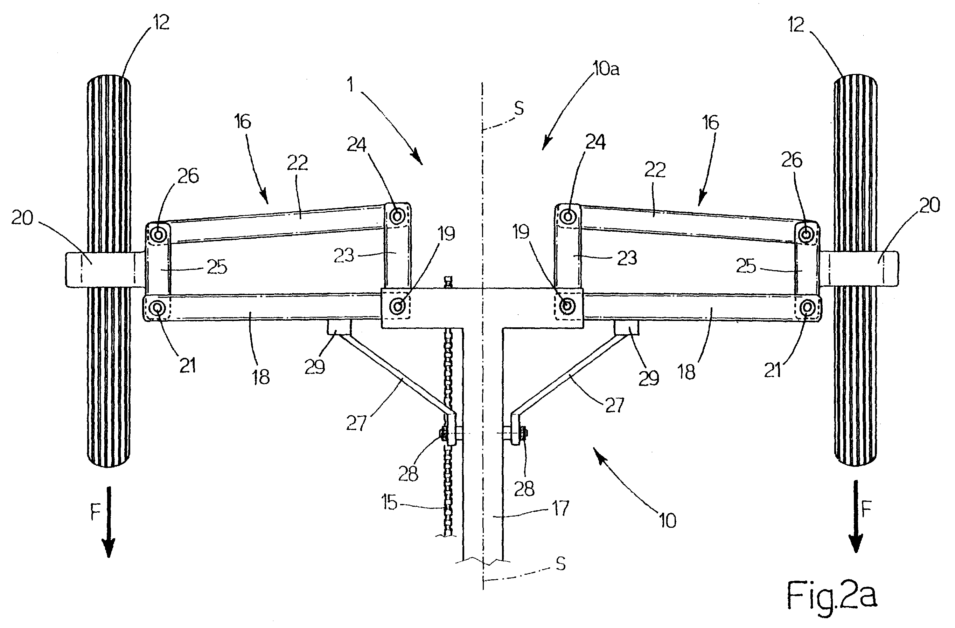

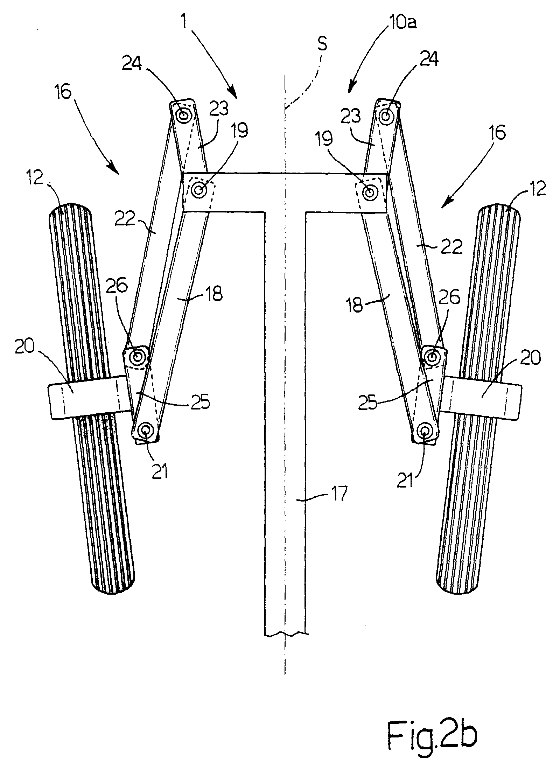

With reference to Figures 2a, 2b, rear train 10a may be divided theoretically into two parts, which are specular with respect to a longitudinal axis of symmetry s, and each of which obviously comprises only one wheel 12.

Since anything stated relative to either rear wheel 12 also applies to the other rear wheel 12, the following description is limited solely to one device 16 for folding either one of wheels 12.

Mechanism 11 is connected to rear train 10a via a supporting element 17 integral with one of the members of the articulated quadrilateral defining mechanism 11.

Device 16 for folding either one of wheels 12, e.g. the left wheel in Figures 2a, 2b, comprises an articulated quadrilateral in turn comprising a main arm 18 hinged at one end to supporting element 17 by a hinge 19, and at the other end to a support 20 of wheel 12 by means of a hinge 21. Device 16 also comprises a connecting bar 22 hinged at one end to a projection 23, integral with element 17, by means of a hinge 24, and at the other end to a projection 25 of support 20 by means of a hinge 26.

Support 20 of wheel 12 may be a fork, as in the Figure 1, 2, 4 embodiment, or any other system for supporting wheel 12.

In short, the members of articulated parallelogram device 16 comprise main arm 18, connecting bar 22, and the two projections 23, 25 integral with element 17 of frame 1 and support 20 of wheel 12 respectively.

Figure 2a shows main arm 18 and connecting bar 22 of device 16 in a position fully extended outwards and perpendicular to axis s, i.e. in the travelling configuration of tricycle 100, in which main arm 18 and connecting bar 22 are locked by a rod 27 hinged to supporting element 17 by a hinge 28. Rod 27 fits inside an element 29, projecting from main arm 18, to retain main arm 18 in the travelling configuration.

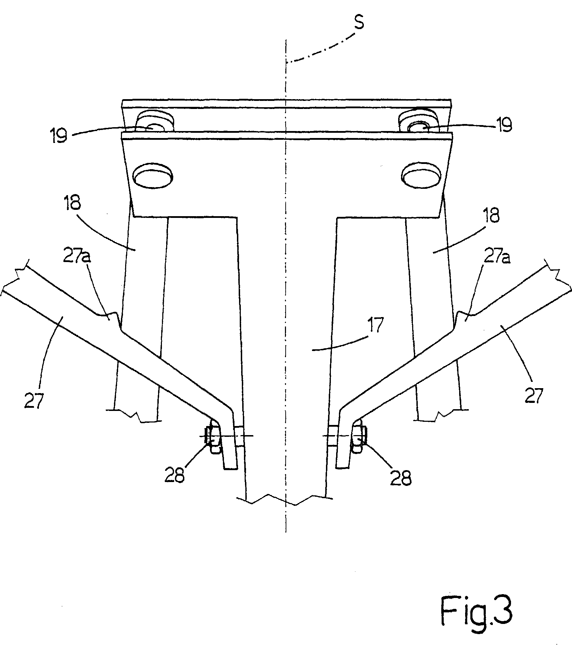

By removing the constraint defined by rod 27, rear wheel 12 can be pushed forward in the direction of arrow F into a position almost completely adjacent to element 17 to reduce the width of tricycle 100; and main arm 18 can be locked in this fully collapsed position by a tooth 27a formed on rod 27 (Figure 3).

That is, together with, but independently of, mechanism 11 for folding part of frame 1 as described in US-3 887 218, and together with the mechanism for folding the front wheel/handlebar assembly as described in EP-648 667, device 16 of each rear wheel 12 provides for achieving a minimum-size configuration when user-folded in the direction of arrow F.

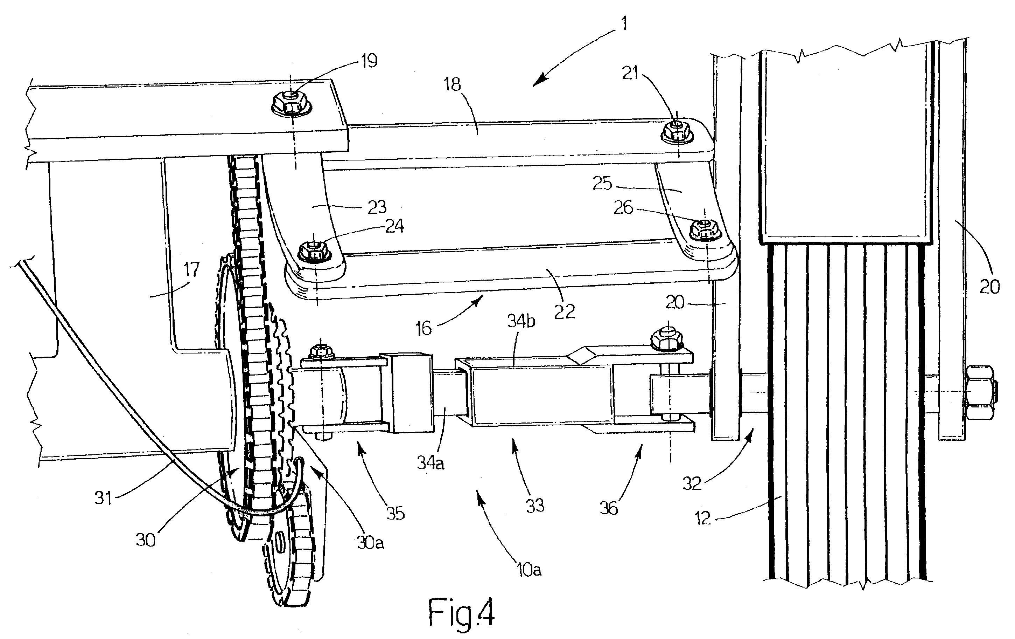

Figure 4 shows a rear view of rear train 10a of tricycle 100.

As shown in Figure 4, rear train 10a is provided with a number of gears 30, which, together with ring gear 13 and chain 15, define a transmission 30a operated conventionally by means of a derail controlled by a cable 31.

By means of transmission 30a, chain 15 can be made to mesh, as selected by the user, with the gear 30 best suited to current travelling conditions.

Gears 30 and the hub 32 of wheel 12 are connected mechanically by a motion transmission device 33.

Device 33 substantially comprises two box members 34a, 34b inserted one inside the other so as to slide telescopically with respect to each other. The free end of member 34a is fitted with a first universal joint 35 connecting member 34a to gears 30, and the free end of member 34b is fitted with a second universal joint 36 which obviously connects member 34b mechanically to hub 32 of wheel 12.

Motion transmission device 33 is specially designed to accompany wheel 12 as wheel 12 is moved into position against element 17. In which respect, a decisive role is played by universal joints 35 and 36, and by the telescopic connection of members 34a and 34b, which enables motion transmission device 33 to be lengthened or shortened as required when articulated parallelogram device 16 is activated by the user.

Portion 10 of frame 1 is further improved by luggage rack 37 (Figure 1), which, when folding frame 1 by means of mechanism 11 (operation not shown in the accompanying drawings), is so positioned that its outer edge 37a supports the whole of tricycle 100 in the collapsed configuration.

As will be clear to a person skilled in the art, without departing from the scope of the present invention, tricycle 100 may be fitted with an explosion engine or electric motor (not shown) for driving the rear wheels (12) and/or the front wheel (not shown), in which case, the chain transmission described above may or may not be dispensed with.

## Claims

1. A frame (1) for a foldable tricycle (100), characterized by comprising a folding device (16) associated with each rear wheel (12); said folding device (16) being defined by an articulated quadrilateral comprising a first member (23) integral with said frame (1); a second member (25) opposite said first member (23) and integral with a support (20) of said wheel (12); and a third (18) and a fourth (22) member connecting said first (23) and said second (25) member so that, when said third member (18) and said fourth member (22) are extended in a configuration substantially perpendicular to the longitudinal axis (s) of symmetry of the tricycle (100), said wheel assumes a travelling configuration, whereas, when said third member (18) and said fourth member (22) are positioned adjacent to said frame (1) in a configuration substantially parallel to said longitudinal axis (s) of symmetry, said wheel (12) is also positioned adjacent to said frame (1) to reduce the overall size of said tricycle (100).

2. A frame (1) as claimed in Claim 1, wherein means (27, 29) are also provided for maintaining said wheel (12) in the travelling configuration.

3. A frame (1) as claimed in any one of the foregoing Claims, wherein means (27, 27a) are also provided for maintaining said wheel (12) in a collapsed position.

4. A frame (1) as claimed in any one of the foregoing Claims, wherein a motion transmission device (33) connects motion transmission means (30) mechanically to a hub (32) of said wheel (12); said device (33) comprising two box members (34a, 34b) inserted one inside the other so as to slide telescopically with respect to each other; and said device (33) also comprising a first universal joint (35) connecting said device (33) to said motion transmission means (30), and a second universal joint (36) connecting said device (33) to said hub (32) of said wheel (12).

5. A frame (1) as claimed in any one of the foregoing Claims, wherein is provided a rear rack (37) connected rigidly to one side of a mechanism (11); said mechanism (11) providing for folding parts of said frame (1); and said rack (37) being so designed that, when said frame (1) is extended in the travelling configuration, the rack acts as a luggage rack, and, when said frame (1) is folded in a minimum-size configuration, the rack acts as a support for said tricycle (100) in the collapsed configuration.

6. A frame (1) as claimed in one of the foregoing Claims, wherein an explosion engine or electric motor is provided for driving said tricycle (100).

7. A tricycle (100), characterized by comprising a frame (1) as claimed in any one of the foregoing Claims.
